(19) Europäisches Patentamt
European Patent Office
Office européen des brevets

(11) EP 1 101 803 A1

(12) **EUROPEAN PATENT APPLICATION**
published in accordance with Art. 158(3) EPC

(43) Date of publication:
**23.05.2001 Bulletin 2001/21**

(21) Application number: **99923921.3**

(22) Date of filing: **04.06.1999**

(51) Int. Cl.$^7$: **C09D 5/00**, C09K 3/00, C08J 7/04, B05D 7/24 // B01J35:02

(86) International application number:
**PCT/JP99/03010**

(87) International publication number:
**WO 99/63011 (09.12.1999 Gazette 1999/49)**

(84) Designated Contracting States:
**AT BE CH CY DE DK ES FI FR GB GR IE IT LI LU MC NL PT SE**

(30) Priority: **04.06.1998 JP 17217098**
**04.12.1998 JP 34625298**

(71) Applicant: **TOTO LTD.**
**Kitakyushu-shi, Fukuoka-ken 802-8601 (JP)**

(72) Inventors:
- **KANNO, Mitsuyoshi,**
**Toto Ltd.**
**Kitakyushu-shi, Fukuoka 802-8601 (JP)**
- **YAMAMOTO, Masahiro,**
**Toto Ltd.**
**Kitakyushu-shi, Fukuoka 802-8601 (JP)**
- **NORIMOTO, Keiichiro,**
**Toto Ltd.**
**Kitakyushu-shi, Fukuoka 802-8601 (JP)**
- **YOSHIDA, Toshiro,**
**Sanyo Chemical Industries, Ltd.**
**Kyoto-shi, Kyoto 605-0995 (JP)**
- **HOKOYAMA, Masahiro,**
**Sanyo Chem. Ind., Ltd.**
**Kyoto-shi, Kyoto 605-0995 (JP)**

(74) Representative:
**Grünecker, Kinkeldey,**
**Stockmair & Schwanhäusser**
**Anwaltssozietät**
**Maximilianstrasse 58**
**80538 München (DE)**

(54) **UNDERCOATING AGENT FOR FORMING PHOTOEXITING COATING FILM OR PHOTOCATALYTIC AND HYDROPHILIC COATING FILM**

(57) Disclosed is an undercoating composition for coating onto the surface of a substrate to form thereon an undercoat on which a photoexcitable coating or a photocatalytically hydrophilifiable coating is to be formed. The undercoating composition comprises at least a surfactant and a solvent. The surfactant is a nonionic surfactant, a fluoro-containing surfactant, or a mixture of the surfactants. The solvent is a water-soluble solvent having a boiling point of 180 to 235°C, an alcohol having 1 to 4 carbon atoms, water, or a mixture of two or more of the solvents. The undercoating composition can form an even thin intermediate layer, without cissing, on coated surfaces of vehicle bodies, building structures and the like, on surfaces of organic substrates, such as resin and wood, or on surfaces of inorganic substrates, such as glasses, mirrors, lenses and stones.



Printed by Xerox (UK) Business Services
2.16.7 (HRS)/3.6

## Description

### BACKGROUND OF THE INVENTION

#### Field of the Invention

The present invention relates to an undercoating composition for the formation of a photoexcitable coating or a photocatalytically hydrophilifiable coating on the surface of a substrate. More particularly, the present invention relates to an undercoating composition for the formation of a photoexcitable coating or a photocatalytically hydrophilifiable coating on coated surfaces of existing vehicle bodies, building structures and the like, on surfaces of organic substrates, such as resin, or on surfaces of inorganic substrates, such as glasses, mirrors, lenses or stones.

#### Background Art

It is well known that exposure of photocatalysts to excitation light sources results in the production of active oxygen species, such as hydroxy radicals or superoxide ions, based on which oxidizing or reducing action, such as oxidative decomposition of organic matter or reduction of metal ions, is created (for example, Japanese Patent Laid-Open Nos. 187322/1985 and 155678/1985).

Further, exposure of photoexcitable coatings to photoexcitation light sources to render the surface of the coating hydrophilic has also been proposed (PCT/WO96/29375).

The formation of an even thin coating is important in the coating of a photocatalyst coating liquid onto coated surfaces of vehicle bodies, building structures and the like or on surfaces of resins. In this case, when an even thin coating is not attained, the photocatalyst-coated surface unfavorably becomes turbid or cloudy. Further, in some cases, photooxidative action of the photocatalyst leads to a deterioration in the resin on its photocatalyst-coated surface.

In order to form an even thin coating or to avoid a photocatalyst-induced deterioration in the photocatalyst-coated surface, a method has been proposed wherein a binder, such as an inorganic binder or a silicone resin, is coated as an undercoating to form an intermediate layer followed by coating thereon a photocatalyst coating liquid. An undercoating composition composed mainly of colloidal silica is described to be particularly preferred (PCT/JP98/02487).

### SUMMARY OF THE INVENTION

The present inventors have now found that an undercoating composition comprising specific components can yield an even thin intermediate layer. They have further found that coating of the undercoating composition followed by coating of a photocatalytically hydrophilifiable coating liquid can yield a transparent even photoexcitable coating or photocatalytically hydrophilifiable coating and at the same time can prevent the photooxidation-induced deterioration in the photocatalyst-coated surface.

Accordingly, it is an object of the present invention to provide an undercoating composition that can form an even thin intermediate layer on which a good photoexcitable coating or photocatalytically hydrophilifiable coating can be formed.

Thus, according to the present invention, there is provided an undercoating composition for coating onto the surface of a substrate to form thereon an undercoat on which a photoexcitable coating or a photocatalytically hydrophilifiable coating is to be formed, said undercoating composition comprising at least a surfactant and a solvent,

said surfactant being a nonionic surfactant, a fluorosurfactant, or a mixture of the surfactants,
said solvent being a water-soluble solvent having a boiling point of 180 to 235°C, an alcohol having 1 to 4 carbon atoms, water, or a mixture of two or more of the solvents.

According to another embodiment of the present invention, the undercoating composition comprises colloidal silica in addition to the above components.

The undercoating composition according to the present invention, when coated on coated surfaces of vehicle bodies, building structures and the like, on surfaces of organic substrates, such as resin and wood, or on surfaces of inorganic substrates, such as glasses, mirrors, lenses or stones, before the formation of a photoexcitable coating or a photocatalytically hydrophilifiable coating on the substrate surface, can form a thin even intermediate layer, and the photoexcitable coating or the photocatalytically hydrophilifiable coating formed on the intermediate layer is free from drawbacks including that the coated surface becomes turbid or cloudy or creates light interference fringes.

The photoexcitable coating or the photocatalytically hydrophilifiable coating formed on the intermediate layer formed of the undercoating composition according to the present invention has an additional advantage that the photocatalyst-coated surface is not deteriorated.

BRIEF DESCRIPTION OF THE DRAWINGS

Fig. 1 is a graph showing a change with time in contact angle of the surface of samples 1 to 3 with water; and
Fig. 2 is a graph showing a change with time in contact angle of the surface of samples 4 and 5 with water with the elapse of time.

DETAILED DESCRIPTION OF THE INVENTION

Surfactant

Nonionic surfactants usable in the present invention include, for example, polyhydric alcohol type nonionic surfactants (such as fatty acid monoesters of glycerol, sorbitan esters, fatty acid esters of sugar), polyethylene glycol type nonionic surfactants (such as polyoxyalkylene oxide adducts of higher alcohols, polyoxyalkylene oxide adducts of alkylphenols, polyoxyalkylene oxide adducts of fatty acids, polyoxyalkylene oxide adducts of higher aliphatic amines, Pluronic type nonionic surfactants, polyoxyalkylene oxide adducts of polyhydric alcohol type nonionic surfactants, and polyether-modified organosiloxane), and fatty acid alkanolamides.
Fluorosurfactants usable herein include, for example, salts of perfluoroalkylsulfonic acids, salts of perfluoroalkylcarboxylic acids, perfluoroalkyl ethylene oxide adducts, perfluoroalkyl trimethyl ammonium salts, salts of perfluoroalkylaminosulfonic acids, oligomers containing perfluoroalkyl groups (for example, "Megafac," manufactured by Dainippon Ink and Chemicals, Inc.), salts of perfluoroalkenyloxybenzenesulfonic acids, perfluoroalkenyloxybenzenesulfonyl sarcosinates in the form of their sodium salts, perfluoroalkenyl polyoxyethylene ether, perfluoroalkenyloxybenzenesulfone alkyl ammonium iodide, perfluoroalkenyloxybenzamide alkyl ammonium iodide, perfluoroalkenyloxyaralkyl betaine, perfluoroalkenyloxyaralkylphosphonic acid, diglycerintetrakis(perfluoroalkenyl polyoxyethylene ether) (for example, "Ftergent," manufactured by Neos Co., Ltd.).
These surfactants may be used alone or in a combination of two or more.
According to a particularly preferred embodiment of the present invention, the nonionic surfactant has a cloud point of 0 to 100°C as measured in the form of a 2 wt% aqueous solution because an evener thin coating can be formed.
According to a preferred embodiment of the present invention, the surfactant is a polyethylene glycol type nonionic surfactant. Particularly preferred are alkylene oxide adducts of higher alcohol or alkylphenols and polyether-modified organopolysiloxanes.
Polyether-modified organopolysiloxanes usable herein include, for example, those represented by formula (I):

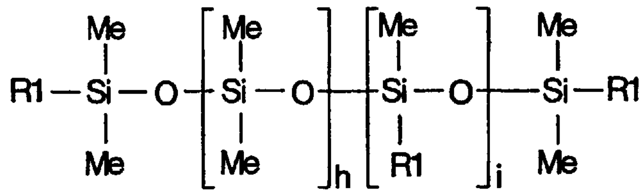

(I)

wherein R1 represents a methyl group or group $-(CH_2)_3-O-(C_2H_4O)_m(C_3H_6O)_n-X$ wherein X represents a hydrogen atom or an alkyl group having 1 to 20 carbon atoms and m and n are each an integer of 0 or more, satisfying $m + n = 1$ to $100$ ; and h and i are each an integer of 1 to 3000.
Fluoro-containing surfactants are preferred because they are very effective in improving leveling of the liquid at the time of coating and, in addition, as compared with other surfactants, are less likely to inhibit development of hydrophilification induced by photoexcitation of the photocatalyst. Further, fluorosurfactants can lower slip resistance in coating of the undercoating composition with a nonwoven fabric or wiping-off of excess undercoating composition with a nonwoven fabric, can advantageously prevent the creation of white streaks (streak milkiness being permanently left in wiping-off of excess undercoating composition and being unable to be removed by cloth or the like without difficulty), and can improve workability.
The surfactant is added to the undercoating composition of the present invention preferably in an amount of about 0.05 to 2% by weight, more preferably about 0.2 to 1.5% by weight. Addition of the surfactant in the above amount

range can reduce cissing phenomenon, yield an evener intermediate layer, further reduce tackiness of the surface after coating and drying, and shorten the time taken for the hydrophilicity to be developed after the formation of a photocatalytically hydrophilifiable coating.

Solvent

According to the present invention, the solvent is a water-soluble solvent having a boiling point of 180 to 235°C, an alcohol having 1 to 4 carbon atoms, water, or a mixture of two or more of the solvents.

Examples of water-soluble solvents having a boiling point of 180 to 235°C usable in the present invention include, but are not particularly limited to, ethylene glycol, diethylene glycol, propylene glycol, dipropylene glycol, diethylene glycol monomethyl ether, diethylene glycol monoethyl ether, diethylene glycol monoisopropyl ether, diethylene glycol monobutyl ether, dipropylene glycol monomethyl ether, dipropylene glycol monoethyl ether, dipropylene glycol monoisopropyl ether, dipropylene glycol monobutyl ether, ethylene glycol dibutyl ether, diethylene glycol diethyl ether, diethylene glycol diisopropyl ether, triethylene glycol dimethyl ether, glycerin monomethyl ether, trimethylene glycol, and N-methylpyrrolidone.

Particularly preferred are a combination of ethylene glycol with diethylene glycol monoethyl ether and a combination of ethylene glycol with diethylene glycol monoisopropyl ether.

Alcohols having 1 to 4 carbon atoms usable herein include, for example, methyl alcohol, ethyl alcohol, n-propyl alcohol, isopropyl alcohol, n-butyl alcohol, isobutyl alcohol, s-butyl alcohol, t-butyl alcohol, 1,3-butanediol, 2,3-butanediol, 1,4-butanediol, and denatured alcohols, such as isopropyl-denatured ethyl alcohol.

Among them, ethyl alcohol, denatured ethyl alcohol, n-propyl alcohol, isopropyl alcohol, and n-butyl alcohol are preferred.

The undercoating composition according to the present invention may contain other water-soluble solvents. Other water-soluble solvents usable herein include, for example, glycol ethers having a boiling point below 180°C, such as ethylene glycol monomethyl ether and propylene glycol monoethyl ether, water-soluble solvents having a boiling point above 235°C, such as triethylene glycol monoethyl ether and tripropylene glycol, and ketones, such as acetone and dimethyl ketone.

Preferred solvents are a mixed solvent composed of a water-soluble solvent having a boiling point of 180 to 235°C and an alcohol having 1 to 4 carbon atoms and a mixed solvent composed of a water-soluble solvent having a boiling point of 180 to 235°C, an alcohol having 1 to 4 carbon atoms, and water.

The solvent is added to the undercoating composition of the present invention preferably in an amount of not more than 99.95% by weight, more preferably about 97.5 to 99.7% by weight. Addition of the solvent in the above amount range can reduce cissing phenomenon, yield an evener intermediate layer, further reduce tackiness of the surface after coating and drying, and shorten the time taken for the hydrophilicity to be developed after the formation of a photocatalytically hydrophilifiable coating.

When the undercoating composition according to the present invention contains a water-soluble solvent having a boiling point of 180 to 235 °C, the content of the water-soluble solvent having a boiling point of 180 to 235°C is preferably 0.5 to 5.0% by weight. Use of the water-soluble solvent having a boiling point of 180 to 235°C in the above amount range can offer even coating and drying, can yield an evener thin coating, can shorten the time necessary for drying after coating, and, when a photocatalytically hydrophilifiable coating liquid is coated, can provide an evener coating.

Colloidal silica

According to another embodiment of the present invention, the undercoating composition may contain colloidal silica in addition to the above components. Colloidal silicas usable in the present invention include, for example, aqueous colloidal silica using water as a dispersion medium and organosol comprising silica dispersed colloidally in a hydrophilic solvent, such as ethyl alcohol, isopropyl alcohol, or ethylene glycol.

According to a preferred embodiment of the present invention, the colloidal silica has a particle diameter of less than 50 nm, more preferably 1 to 30 nm, still more preferably 5 to 20 nm. The above particle diameter range is advantageous in that satisfactory binder effect can be attained and, in addition, unfavorable phenomena including a lowering in gloss of the photocatalytically hydrophilifiable coating by the photocatalyst can be effectively prevented.

When colloidal silica is incorporated, the colloidal silica has a silica content of preferably 0.04 to 2% by weight, more preferably 0.1 to 1% by weight. In the above content range, coating of the undercoating composition by the following method can realize the formation of a thin layer having a thickness of not more than 50 nm which is an even intermediate layer free from light interference fringes.

Optional components

If necessary, preservatives, perfumes, antioxidants, chelating agents, antifoaming agents and the like may be mixed in or used in combination with the undercoating composition according to the present invention. Further, LPG, dimethyl ether, or a compressed gas of nitrogen, carbon dioxide gas, air or the like, together with the undercoating composition, may be sealed to prepare an aerosol spray.

Substrate

Before the formation of a photoexcitable coating or a photocatalytically hydrophilificable coating, the undercoating composition according to the present invention is applied onto a substrate on which the photoexcitable coating or the photocatalytically hydrophilifiable coating is to be formed. Examples of preferred substrates usable herein include: coated surfaces of vehicle bodies, building structures and the like; surfaces of organic substrates, for example, resins, such as polyester resin, polyamide resin, acrylic resin, polyolefin resin, and polycarbonate resin, and wood; and surfaces of inorganic substrates, for example, glasses, mirrors, and lenses such as windowpanes for buildings and vehicles, mirrors for bathrooms, washrooms, and automobiles, lenses for eyeglasses, cover glasses, for boards of various instrument panels and the like; and stones.

Coating method

The undercoating composition according to the present invention may be coated onto the surface of a substrate by any suitable method selected from coating methods which can evenly coat the undercoating composition. Examples of coating methods usable herein include roller touching, bar coating, spraying, brush coating, sponge coating, and a spreading with use of a woven fabric, paper or the like to be impregnated therewith.

After coated in a suitable amount by any of these methods, the undercoating composition is dried to from a coating. The drying may be carried out either at room temperature or under heating. Instead of drying, excess undercoating composition may be wiped off with a dry cloth. Wiping can simultaneously remove soil. This can advantageously contribute to satisfactory development of the function of the photocatalyst coating composition.

Photocatalyst coating composition, photoexcitable coating, and photocatalytically hydrophilifiable coating

The photocatalyst coating composition for the photoexcitable coating or the photocatalytically hydrophilifiable coating preferably comprises:

(a) photocatalyst particles of a metal oxide;
(b) a sparingly decomposable binder comprising at least one member selected from the group consisting of fine particles of silica, silicone resin film precursors capable of forming silicone resin films, and silica film precursors capable of forming silica films; and
(c) a solvent.

Further, leveling agents, surfactants, polymerization curing catalysts, hydrolysis catalysts, antimicrobial metals, pH adjustors, and storage stabilizers and the like may be added.

As the photocatalytic metal oxide, there may be used at least one member selected from the group consisting of anatase form of titanium oxide, brookite form of titanium oxide, rutile form of titanium oxide, tin oxide, zinc oxide, dibismuth trioxide, tungsten trioxide, ferric oxide, and strontium titanate.

The photocatalyst particles preferably have an average crystallite diameter of not more than 100 nm. The upper limit of the average crystallite diameter is preferably about 20 nm, more preferably about 10 nm. The lower limit of the average crystallite diameter is preferably about 1 nm. An average crystallite diameter of the photocatalyst particles in the above range enables to attain a satisfactory hydrophilification and, at the same time, makes it possible to prevent the transparency of a surface, with the composition applied thereto, from being lost due to scattering of visible light caused by the particles.

The average crystallite diameter of photocatalyst particles may be determined by the Scherrer's equation from the integral width of the strongest peak around $2\theta = 25.3°$ as determined by powdery X-ray diffractometry of the particles.

The sparingly decomposable binder may contain fine particles of silica. The fine particles of silica are considered to function to efficiently fix the photocatalyst particles onto the surface of the member. According to a preferred embodiment of the present invention, the fine particles of silica have an average particle diameter of preferably 1 to 100 nm, more preferably 5 to 50 nm, and most preferably 8 to 20 nm. The average particle diameter of the fine particles of

silica may be determined, for example, by dynamic laser scattering.

A preferred example of the silica coating precursor capable of forming a silica coating usable in the photocatalyst coating composition is a silicate having an average composition represented by the following formula:

$$SiX_qO_{(4-q)/2}$$

wherein X represents an alkoxy group or a halogen atom and q is a number satisfying $0 < q < 4$.

Another preferred example of the silica coating precursor capable of forming a silica coating is a tetrafunctional hydrolyzable silane derivative represented by the general formula:

$$SiX_4$$

wherein X represents an alkoxy group or a halogen atom.

Specific examples of preferred tetrafunctional hydrolyzable silane derivatives usable herein include tetramethoxysilane, tetraethoxysilane, tetrapropoxysilane, tetrabutoxysilane, diethoxydimethoxysilane, tetrachlorosilane, tetrabromosilane, silanol, and dimethoxydiethoxysilane.

Specific examples of preferred silicates usable herein include partial hydrolyzates and dehydropolycondensation products of the tetrafunctional hydrolyzable silane derivatives.

Examples of another preferred silica film precursors capable of forming silica films include silicates, such as lithium silicate, potassium silicate, and water glass.

A preferred example of the silicone coating precursor, capable of forming a silicone coating, which may be used in the photocatalyst coating composition is a siloxane having an average composition represented by the following formula:

$$R_pSiX_qO_{(4-p-q)/2}$$

wherein

R represents a member selected from the group consisting of a hydrogen atom and one or more organic groups;
X represents an alkoxy group or a halogen atom; and
p is a number satisfying $0 < p < 2$ and q is a number satisfying $0 < q < 4$.

Another preferred example of the silicone coating precursor, capable of forming a silicone coating, which may be used in the photocatalyst coating composition is a hydrolyzable silane derivative represented by the general formula:

$$R_pSiX_{4-p}$$

wherein

R is as defined above;
X represents an alkoxy group or a halogen atom; and
p is 1 or 2.

In this case, preferably, the organic group represented by R refers to an alkyl (more preferably an unsubstituted alkyl having 1 to 18 carbon atoms, most preferably an alkyl having 3 to 18 carbon atoms) or an aryl (preferably phenyl).

Specific examples of preferred hydrolyzable silane derivatives include methyltrimethoxysilane, methyltriethoxysilane, methyltripropoxysilane, methyltributoxysilane, ethyltrimethoxysilane, ethyltriethoxysilane, ethyltripropoxysilane, ethyltributoxysilane, phenyltrimethoxysilane, phenyltriethoxysilane, phenyltripropoxysilane, phenyltributoxysilane, dimethyldimethoxysilane, dimethyldiethoxysilane, dimethyldipropoxysilane, dimethyldibutoxysilane, diethyldimethoxysilane, diethyldiethoxysilane, diethyldipropoxysilane, diethyldibutoxysilane, phenylmethyldimethoxysilane, phenylmethyldiethoxysilane, phenylmethyldipropoxysilane, phenylmethyldibutoxysilane, n-propyltrimethoxysilane, n-propyltriethoxysilane, n-propyltripropoxysilane, n-propyltributoxysilane, γ - glycosidoxypropyltrimethoxysilane, and γ - acryloxypropyltrimethoxysilane.

The siloxane may be prepared by partial hydrolysis and dehydropolycondensation of the hydrolyzable silane derivative, or by dehydropolycondensation of a partial hydrolyzate of the hydrolyzable silane derivative with a partial hydrolyzate of tetramethoxysilane, tetraethoxysilane, tetrapropoxysilane, tetrabutoxysilane, diethoxydimethoxysilane or

the like.

The amount of the precursor added to the photocatalyst coating composition may be suitably determined. For example, in terms of the silica content based on one part by weight of the photocatalyst particle, the upper limit of the precursor content is preferably 10 parts by weight, more preferably 5 parts by weight, most preferably 1 part by weight, and the lower limit of the precursor content is preferably 0.05 part by weight, more preferably 0.1 part by weight, and most preferably 0.2 part by weight.

The solvent contained in the photocatalyst coating composition is not limited so far as it can stably disperse the photocatalytic particles and the precursor and a hydrophilified surface is finally provided. Examples of solvents usable herein include water, organic solvents, and mixed solvents composed of water and organic solvents. Water, an alcohol, and mixed solvents composed of water and an alcohol are particularly preferred.

Alcohols usable herein include methanol, ethanol, n-propanol, isopropanol, butanol, and pentanol.

The photocatalyst coating composition, together with LPG, dimethyl ether, or a compressed gas of nitrogen, carbon dioxide gas, air or the like, may be sealed with in a can or an aluminum container coated with a resin to prepare an aerosol spray.

Formation of photoexcitable coating or photocatalytic hydrophilifiable coating

A photoexcitable coating or a photocatalytically hydrophilifiable coating may be formed by coating the photocatalyst coating composition onto the intermediate layer formed from the undercoating composition according to the present invention and drying or curing the coating.

Suitable methods for coating the coating composition usable herein include a spray coating, a dip coating, a flow coating, a spin coating, a roll coating, a brush coating, a sponge coating, and a spreading with use of a woven fabric, paper or the like to be impregnated therewith.

Curing methods usable herein include polymerization by heat treatment, allowing to stand at room temperature, ultraviolet irradiation andr the like.

The formation of a coating on the surface of the member by the above method permits the surface of the member to be hydrophilified in response to photoexcitation of the photocatalyst.

In this case, for the development of a high level of hydrophilification of the surface of the substrate by photoexcitation of the photocatalyst, the intensity of the excitation light is generally not less than 0.001 $mW/cm^2$, preferably not less than 0.01 $mW/cm^2$, more preferably not less than 0.1 $mW/cm^2$.

When the photocatalytic oxide is anatase form of titanium oxide, rutile form of titanium oxide, zinc oxide, or strontium titanate, suitable examples of light sources for photoexcitation of the photocatalyst include sunlight, interior illumination, fluorescent lamps, mercury lamps, incandescent lamps, xenon lamps, high pressure sodium lamps, metal halide lamps, and BLB lamps. On the other hand, when the photocatalytic oxide is tin oxide, bactericidal lamps, BLB lamps and the like are suitable.

The photocatalyst layer applied onto the surface of the member preferably has a thickness of not more than 0.4 μm. This layer thickness can prevent the layer being rendered milky due to irregular reflection of light and can realize a substantially transparent surface layer.

The thickness of the photocatalyst layer is more preferably not more than 0.2 μm. This layer thickness can prevent color development of the photocatalyst layer caused by interference of light. The smaller the thickness of the photocatalyst layer, the better the transparency of the photocatalyst layer. Further, reducing the thickness of the photocatalyst layer can advantageously provide improved abrasion resistance of the photocatalyst layer.

EXAMPLES

The following examples further illustrate the present invention, but are not intended to limit it. In the following examples and comparative examples, "%" is by weight.

Examples 1 to 9

Ingredients shown in Table 1 were mixed together in various proportions to prepare undercoating compositions of Examples 1 to 9 according to the present invention.

Table 1

| | | Example | | | | | | | | |
|---|---|---|---|---|---|---|---|---|---|---|
| | | 1 | 2 | 3 | 4 | 5 | 6 | 7 | 8 | 9 |
| Colloidal silica | S1 | 0.1 | 0.2 | 0.4 | | | | | | 0.04 |
| | S2 | | | | 0.2 | 0.8 | 1.6 | | | |
| | S3 | | | | | | | 0.5 | 2 | |
| Surfactant | N1 | 0.5 | | | | 1.2 | | | | 1 |
| | N2 | | 0.3 | | | | 0.1 | | | |
| | N3 | | | 0.3 | | | 0.1 | 0.2 | | |
| | N4 | | | | 0.3 | | | | 0.5 | |
| Water-soluble solvent | H1 | 0.5 | | | | 1 | | 0.5 | | |
| | H2 | | 1 | | 1 | | 1.5 | 0.5 | | |
| | H3 | | | 2 | 1.5 | 2 | | 0.5 | | |
| | H4 | | | | | | 0.2 | | 0.5 | 1 |
| | L1 | 5 | | 2 | 10 | | 5 | | 97 | |
| | L2 | | 1 | | | 15 | | 50 | | |
| Water | W | 93.9 | 97.5 | 95.3 | 87 | 80 | 91.5 | 47.8 | 0 | 97.96 |

Remarks:

Numerical values in the table are in wt%.

S1: Aqueous colloidal silica, particle diameter 10 to 20 nm
S2: Aqueous colloidal silica, particle diameter 7 to 12 nm
S3: Organosilica sol (ethylene glycol), particle diameter 10 to 20 nm
N1: Polyoxyethylene (12) lauryl ether, 2% cloud point 80°C
N2: Polyoxyethylene (10) nonylphenyl ether, 2% cloud point 55°C
N3: Polyether-modified organopolysiloxane, 2% cloud point 78°C
N4: Polyether-modified organopolysiloxane, 2% cloud point 62°C
H1: Propylene glycol, boiling point 188°C
H2: Ethylene glycol, boiling point 198°C
H3: Diethylene glycol monoethyl ether, boiling point 196°C
H4: Triethylene glycol dimethyl ether, boiling point 216°C
L1: Isopropyl alcohol
L2: Methanol-modified ethyl alcohol

Numerical values in parenthesis with respect to polyoxyethylene (12) and the like represents the number of moles of alkylene oxide added.

Comparative Examples 1 to 3

Ingredients shown in Table 2 were mixed together in various proportions to prepare undercoating compositions of Comparative Examples 1 to 3.

Table 2

| | | Comparative Example | | |
|---|---|---|---|---|
| | | 1 | 2 | 3 |
| Colloidal silica | S1 | 0.3 | 0.5 | 0.7 |
| Surfactant | N1 | | | |
| | N5 | 0.6 | | |
| | N6 | | 0.8 | 0.5 |
| | A2 | | | 0.2 |
| Water-soluble solvent | H5 | 2 | | |
| | H6 | | 2 | |
| | H7 | | | 2 |
| | H4 | | | |
| | L1 | | | |
| | L3 | 10 | 20 | 30 |
| Water | W | 87.1 | 76.7 | 66.6 |

Remarks:

Numerical values in the table are in wt%.

S1: Aqueous colloidal silica, particle diameter 10 to 20 nm
N1: Polyoxyethylene (12) lauryl ether, 2% cloud point 80°C
N5: Polyoxyethylene (8.5) nonylphenyl ether, 2% cloud point 42°C
N6: Polyether-modified organopolysiloxane, 2% cloud point 38°C
A2: Sodium laurylsulfate
H5: Triethylene glycol, boiling point 276°C
H6: Triethylene glycol monoethyl ether, boiling point 256°C
H7: Diethylene glycol dibutyl ether, boiling point 255°C
H4: Triethylene glycol dimethyl ether, boiling point 216°C
L1: Isopropyl alcohol
L3: Isopropyl alcohol-modified ethyl alcohol

Numerical values in parenthesis with respect to polyoxyethylene (12) and the like represents the number of moles of alkylene oxide added.

Preparation of photocatalyst-coated plates

The undercoating compositions shown in Tables 1 and 2 were coated on a painted steel plate and a transparent acrylic resin plate. The coated plates were dried at room temperature, followed by coating threon a photocatalyst coating liquid. Thus, photocatalyst-coated plates were prepared.

Evaluation results

Main evaluation results in each step are summarized in Table 3.

Table 3

| | | Coverage, g/m² | Coatability of undercoating composition | | Light interference fringes | After coating of photocatalyst | Deterio-ration in resin layer |
|---|---|---|---|---|---|---|---|
| | | | on painted steel plate | on acrylic resin plate | | | |
| Ex. | 1 | 15 | B | A | A | A | A |
| | 2 | 10 | B | A | A | A | A |
| | 3 | 10 | A | A | A | A | A |
| | 4 | 12 | A | A | A | A | A |
| | 5 | 7 | B | A | A | A | A |
| | 6 | 5 | A | A | A | A | A |
| | 7 | 10 | A | A | A | A | A |
| | 8 | 5 | A | A | A | A | A |
| | 9 | 20 | B | B | A | B | C |
| Comp. Ex. | 1 | 10 | C | B | A | D | A |
| | 2 | 8 | C | B | A | D | A |
| | 3 | 7 | D | C | A | D | A |

Remarks:

Tests and evaluation were carried out by the following methods.

The undercoating compositions shown in Tables 1 and 2 were spray coated onto a test panel of a painted steel plate and a test panel of a transparent acrylic resin plate each having a size of 30 cm x 30 cm. The coated plates were dried at room temperature for 15 min. Thereafter, a photocatalyst coating liquid 1 (a composition prepared by diluting a photocatalyst coating composition, comprising 10% by weight in total of particles of anatase form of titanium dioxide (particle diameter about 10 nm) and amorphous silica and 90% by weight in total of 2-propanol, water, methanol, and nitric acid, with 1-propanol at 1 : 100 dilution) was spray coated on the plates coated with the undercoating compositions.

Coverage:

The coverage of the undercoating composition was expressed in $g/m^2$.

Coatability of undercoating composition:

Each undercoating composition was visually evaluated for cissing and uneven coating upon coating and drying.

A: No cissing with even coating.
B: No cissing with slightly uneven coating.
C: Slight cissing with uneven coating.
D: Difficulties experienced in coating due to cissing with uneven coating.

Light interference fringes:

Each undercoating composition was visually evaluated for light interference fringes upon coating and drying.

A. No light interference fringes created.
B. Substantially no light interference fringes created.
C. Slight light interference fringes created.
D. Light interference fringes created.

Surface appearance after coating of photocatalyst:

The surface appearance after coating of the photocatalytically hydrophilifiable coating liquid and drying the coating was visually evaluated.

A: Transparent and even with no uneven coating.
B: Transparent and even with somewhat uneven coating.
C: Uneven coating.
D: Considerably lowered transparency with uneven coating.

Deterioration in resin layer:

The test panels after coating of the photocatalytically hydrophilifiable coating liquid and drying the coating were exposed outdoors to sunlight for 180 days, and then visually evaluated for the surface appearance.

A: Transparent and even without a deterioration in the resin layer.
B: Transparent and even with partial clouding, suggesting slight deterioration in the resin layer.
C: Partially opaque, suggesting a deterioration in the resin layer.
D: Wholly cloudy, suggesting a deterioration in the resin layer.

Evaluation of hydrophilicity:

The undercoating composition, shown in Table 1, prepared in Example 4 was coated by means of gauze onto a test panel of the painted steel plate having a size of 7 cm x 15 cm. The coated test panel was dried at room temperature for 15 min. Thereafter, the photocatalyst coating liquid 1 was spray coated thereon to obtain samples #1 to #3. The coverage of the undercoating composition prepared in Example 4 was zero for sample #1, 3.5 g/$m^2$ for sample #2, 5.5 g/$m^2$ for sample #3. The coverage of the photocatalyst coating liquid was 53.5 g/$m^2$ for sample #1, 52.8 g/$m^2$ for sample #2, and 53.5 g/$m^2$ for sample #3. These samples were exposed to sunlight to apply ultraviolet light thereto, and, in this state, the contact angle between the samples and water was measured with the elapse of time. The results are shown in a graph of Fig. 1. The results show that improved hydrophilicity has attained upon coating of the undercoating composition of Example 4.

Examples 10 to 21

Ingredients shown in Table 4 were mixed together in various proportions to prepare undercoating compositions of Examples 10 to 21 according to the present invention.

Table 4

| | | Example | | | | | | | | | | | |
|---|---|---|---|---|---|---|---|---|---|---|---|---|---|
| | | 10 | 11 | 12 | 13 | 14 | 15 | 16 | 17 | 18 | 19 | 20 | 21 |
| Surfactant | N1 | 0.2 | | | | | | | | | | | |
| | N2 | | 0.6 | | | | | | | | | | |
| | N4 | | | 0.1 | | | | | | | | 0.1 | |
| | N5 | | | | 0.8 | | | | | | | | 0.5 |
| | N6 | | | | | 0.3 | | | | | | | |
| | N7 | | | | | | 0.3 | | | | | | |
| | N8 | | | | | | | 0.2 | | | | | |
| | N9 | | | | | | | | 0.4 | | | | |
| | N10 | | | | | | | | | 1 | | | |
| | F1 | | | | | | | | | | 0.2 | | |
| Water-soluble solvent | H2 | 1.5 | 0.5 | 0.5 | | 2.0 | 0.5 | 0.5 | 0.5 | 0.5 | 1.5 | | |
| | H3 | 1.5 | 2.5 | | 1.5 | 1.5 | | 2.5 | 1.0 | 2.5 | 1.5 | | |
| | H4 | | | 2.5 | 1.5 | | 2.0 | | 1.5 | | | | |
| | L1 | 96.8 | | 96.9 | | | 97.2 | 91.8 | 96.6 | | | 99.9 | |
| | L4 | | 96.4 | | 61.2 | 96.2 | | | | 76 | 61.8 | | |
| | L5 | | | | 10 | | | 5 | | 5 | 15 | | 79.5 |
| Water | W | | | | 25 | | | | | 15 | 20 | | 20 |

Remarks:

Numerical values in the table are in wt%.

N1: Polyoxyethylene (12) lauryl ether, 2% cloud point 80°C
N2: Polyoxyethylene (10) nonylphenyl ether, 2% cloud point 55°C
N4: Polyether-modified polyorganosiloxane, 2% cloud point 62°C
N5: Polyoxyethylene (8.5) nonylphenol, 2% cloud point 42°C
N6: Polyether-modified organopolysiloxane, 2% cloud point 38°C
N7: Polyoxyethylene (7) lauryl ether, 2% cloud point 33°C
N8: Polyoxyethylene (6) polyoxypropylene (2) lauryl ether, 2% cloud point 32°C
N9: Polyoxyethylene (6) oleyl ether, 2% cloud point 8°C
N10: Polyoxyethylene (14) oleyl ether, 2% cloud point 90°C
F1: Fluorosurfactant, Megafac F-177, manufactured by Dainippon Ink and Chemicals, Inc.
H2: Ethylene glycol, boiling point 198°C
H3: Diethylene glycol monoethyl ether, boiling point 196°C
H4: Triethylene glycol dimethyl ether, boiling point 216°C
L1: Isopropyl alcohol
L4: 1-Propyl alcohol
L5: n-Butyl alcohol

Numerical values in parenthesis with respect to polyoxyethylene (12) and the like represents the number of moles of alkylene oxide added.

Comparative Examples 4 to 6

Ingredients shown in Table 5 were mixed together in various proportions to prepare undercoating compositions of Comparative Examples 4 to 6.

Table 5

| | | Comparative Example | | |
|---|---|---|---|---|
| | | 4 | 5 | 6 |
| Surfactant | A1 | 0.4 | | |
| | A3 | | 0.5 | |
| | A4 | | | 0.8 |
| Water-soluble solvent | H3 | 2.5 | 1.5 | 2 |
| | L1 | | 68 | 72.2 |
| | L5 | 57.1 | | |
| Water | W | 40 | 30 | 25 |

Remarks:

Numerical values in the table are in wt%.

A1: Sodium di-2-ethylhexylsulfosuccinate
A3: Sodium polyoxyethylene (4) nonylphenyl ether sulfate
A4: Sodium polystyrenesulfonate
H3: Diethylene glycol monoethyl ether, boiling point 196°C
L1: Isopropyl alcohol
L5: n-Butyl alcohol

Numerical values in parenthesis with respect to polyoxyethylene (12) and the like represents the number of

moles of alkylene oxide added.

Preparation of photocatalyst-coated plates

The undercoating compositions shown in Tables 4 and 5 were coated on a painted steel plate and a glass plate. The coated plates were dried at room temperature, followed by coating of a photocatalyst coating composition. Thus, photocatalyst-coated plates were prepared.

Evaluation results

Main evaluation results in each step are summarized in Table 6.

Table 6

| | | Coverage, $g/m^2$ | Coatability of undercoating composition | | After coating of photocatalyst | |
|---|---|---|---|---|---|---|
| | | | Painted steel plate | Glass plate | Painted steel plate | Glass plate |
| Ex. | 10 | 12.5 | A | A | A | A |
| | 11 | 12.5 | A | A | A | A |
| | 12 | 12.5 | A | A | A | A |
| | 13 | 12.5 | B | A | A | A |
| | 14 | 12.5 | A | A | B | A |
| | 15 | 12.5 | A | A | A | A |
| | 16 | 12.5 | A | A | A | A |
| | 17 | 12.5 | B | A | B | A |
| | 18 | 12.5 | B | A | B | A |
| | 19 | 12.5 | B | A | B | A |
| | 20 | 12.5 | C | A | C | B |
| | 21 | 12.5 | C | B | C | C |
| Comp. Ex. | 4 | 12.5 | B | A | D | D |
| | 5 | 12.5 | A | A | D | D |
| | 6 | 12.5 | B | B | D | D |

Remarks:

Tests and evaluation were carried out by the following methods.

The undercoating compositions shown in Tables 4 and 5 were spray coated onto a test panel of a painted steel plate and a test panel of a glass plate each having a size of 30 cm x 30 cm. The coated plates were dried at room temperature for 15 min. Thereafter, a photocatalyst coating 11 comprising: 4.0% by weight of a photocatalytically hydrophilifiable coating liquid comprising 10% by weight in total of anatase form of titanium dioxide and amorphous silica (Hydrotect Body Coating, top coating liquid B, ENB 10B, manufactured by TOTO, LTD.; comprising 10% by weight in total of particles of anatase form of titanium dioxide and amorphous silica and 90% by weight in total of 2-propanol, water, methanol, and nitric acid); and 96.0% by weight of a diluting liquid composed mainly of 1-propanol (Hydrotect Body Coating, top coating liquid A, ENB 10A, manufactured by TOTO, LTD.) was spray coated at a coverage of 25 $g/m^2$.

Coatability of undercoating composition:

Each undercoating composition was visually evaluated for cissing and uneven coating upon coating and drying.

A: No cissing with even coating.
B: No cissing with slight uneven coating.
C: Slight cissing with uneven coating.
D: Difficulties experienced in coating due to cissing with uneven coating.

Surface appearance after coating of photocatalyst:

The surface appearance after coating of the photocatalytically hydrophilifiable coating liquid and drying the coating was visually evaluated.

A: Transparent and even with no uneven coating.
B: Transparent and even with somewhat uneven coating.
C: Uneven coating.
D: Considerably lowered transparency with uneven coating.

Evaluation of hydrophilicity:

The undercoating compositions, shown in Table 4, prepared in Examples 10 and 19 were coated onto a float plate glass having a size of 10 cm x 10 cm (the coating surface having been previously cleaned) by means of a nonwoven fabric (Benliese TS 327, manufactured by Asahi Chemical Industry Co, Ltd.) at a coverage of about 7 $g/m^2$. Subsequently, the photocatalyst coating liquid 1 was spray coated thereon at a coverage of 25 $g/m^2$ to form photocatalyst coatings. Thus, samples #4 and #5 were obtained. The photocatalyst-coated glass samples thus obtained were irradiated with BLB light, and, in this state, the contact angle between the surface of the samples and water was measured with the elapse of time. At that time, the intensity of ultraviolet light at 360 nm was 0.5 $mW/cm^2$. The results are shown in Fig. 2.

The results show that, for the fluoro-coating surfactants used in Example 20, the inhibition of the development of the hydrophilicity has become low.

<u>Examples 22 and 23 and Comparative Example 7</u>

Ingredients shown in Table 7 were mixed together in various proportions to prepare undercoating compositions of Examples 22 and 23 according to the present invention and Comparative Example 7.

Table 7

| | | Ex. 22 | Ex. 23 | Comp. Ex. 7 |
|---|---|---|---|---|
| Surfactant | F2 | 0.1 | | |
| | N1 | | 0.1 | |
| | A5 | | | 0.1 |
| Water-soluble solvent | H2 | 1 | 1 | 1 |
| | H3 | 1 | 1 | 1 |
| | L6 | 20 | 20 | 20 |
| Water | W | 77.9 | 77.9 | 77.9 |

Remarks:

Numerical values in the table are in wt%.

F2: Fluoro-containing surfactant, Ftergent FT-251, manufactured by Neos Co., Ltd.
N1: Polyoxyethylene (12) lauryl ether, 2% cloud point 80°C
A5: Sodium dodecylsulfonate
H2: Ethylene glycol, boiling point 198°C
H3: Diethylene glycol monoethyl ether, boiling point 196°C
L6: Ethanol

Preparation of photocatalyst-coated plates

The undercoating compositions shown in Table 7 were coated on windowpanes. The coated windowpanes were dried at room temperature, followed by coating of a photocatalyst coating liquid to obtain photocatalyst-coated plates.

Evaluation results

Main evaluation results in each step are summarized in Table 8.

Table 8

| | Ex. 22 | Ex. 23 | Comp. Ex. 7 |
|---|---|---|---|
| Slip resistance | A | C | C |
| White streak | A | C | C |
| Appearance of coating | A | A | D |
| Hydrophilicity | A | A | A |

Remarks:

Tests and evaluation were carried out by the following methods.

The undercoating compositions shown in Table 7 were coated onto windowpanes having a size of about 90 cm x 90 cm at a coverage of about 7 g/$m^2$ by means of a nonwoven fabric (Benliese TS 327, manufactured by Asahi Chemical Industry Co, Ltd.). Next, a dry nonwoven fabric (Benliese TS 327, manufactured by Asahi Chemical Industry Co, Ltd.) was reciprocated on the coated windowpanes 10 times to wipe off the excess undercoating compositions. A photocatalytically hydrophilifiable coating liquid was spray coated by means of a photacatalytically hydrophilifiable aerosol spray onto the undercoats at a coverage of 25 g/$m^2$. The aerosol spray had a composition shown in Table 9.

Table 9

| | Ingredients | Wt% |
|---|---|---|
| Photocatalytically hydrophilifiable coating liquid | ST-K01 | 2.0 |
| | ST-K03 | 2.0 |
| | 1-Propyl alcohol | 32 |
| | Propylene glycol monoethyl ether | 4.0 |
| Propellant | Dimethyl ether | 60 |

Remarks:

ST-K01: A photocatalyst coating composition, manufactured by Ishihara Sangyo Kaisha Ltd., comprising 8.0% by weight of particles of anatase form of titanium dioxide, 2.0% by weight of amorphous silica, 2-propanol, water, methanol, and nitric acid.

ST-K03: A photocatalyst coating composition, manufactured by Ishihara Sangyo Kaisha Ltd., comprising 5.0% by weight of particles of anatase form of titanium dioxide, 5.0% by weight of amorphous silica, 2-propanol, water, methanol, and nitric acid.

Slip resistance:

The degree of resistance at the time of wiping of the undercoating composition with the dry nonwoven fabric was evaluated.

A: Low resistance, light
B: Somewhat heavy
C: Heavy
D: Very heavy

White streak:

At the time of wiping-off of the excess undercoating composition with a dry nonwoven fabric, evaluation was made on whether white streaks are left and on the removability of the excess undercoating composition.

A: No white streaks are left with the excess undercoating composition being easily removed.
B: White streaks are slightly left with the excess undercoating composition being easily removed.
C: White streaks are somewhat left with a lot of time being taken for removing the excess undercoating composition.
D: White streaks are left with difficulties being encountered in removing the excess undercoating composition.

Appearance of coating:

The transparency of the photocatalyst coating was visually evaluated.

A: Excellent
B: Good
C: Slightly whitened
D: Whitened

Hydrophilicity:

Water was hand sprayed onto the photocatalyst coating before light irradiation. The surface of the photocatalyst coating was then visually inspected for the formation of water droplets.

A: Water droplets were not formed at all, suggesting very good hydrophilicity of the photocatalyst coating.
B: Water droplets were not formed, suggesting good hydrophilicity.
C: Water droplets were somewhat formed.
D: Water droplets were formed.

The sample of Example 22 using a fluoro-coating surfactant has attained low slip resistance at the time of wiping without causing any white streak, demonstrating very good workability at the time of the application of the undercoating composition onto the substrate.

## Claims

**1.** An undercoating composition for coating onto the surface of a substrate to form thereon an undercoat on which a photoexcitable coating or a photocatalytically hydrophilifiable coating is to be formed, said undercoating composition comprising at least a surfactant and a solvent,

said surfactant being a nonionic surfactant, a fluoro-containing surfactant, or a mixture of the surfactants,
said solvent being a water-soluble solvent having a boiling point of 180 to 235°C, an alcohol having 1 to 4 carbon atoms, water, or a mixture of two or more of the solvents.

**2.** The undercoating composition according to claim 1, which further comprises colloidal silica.

**3.** The undercoating composition according to claim 1 or 2, wherein the nonionic surfactant has a cloud point of 0 to 100°C as measured in the form of a 2 wt% aqueous solution.

**4.** The undercoating composition according to any one of claims 1 to 3, wherein the solvent is a mixed solvent composed of a water-soluble solvent having a boiling point of 180 to 235°C and an alcohol having 1 to 4 carbon atoms, or a mixed solvent composed of a water-soluble solvent having a boiling point of 180 to 235°C, an alcohol having 1 to 4 carbon atoms, and water.

5. The undercoating composition according to any one of claims 1 to 4, which contains the surfactant in an amount of 0.05 to 2.0% by weight and the solvent in an amount of not more than 99.95% by weight.

6. The undercoating composition according to any one of claims 2 to 5, which contains the colloidal silica in an amount of 0.04 to 2.0% by weight.

7. The undercoating composition according to any one of claims 1 to 6, which contains the water-soluble solvent having a boiling point of 180 to 235°C in an amount of 0.5 to 5% by weight of.

8. The undercoating composition according to any one of claims 1 to 7, wherein the nonionic surfactant is a polyethylene glycol moiety containing nonionic surfactant based on an alkylene oxide adduct of a higher alcohol or an alkylphenol.

9. The undercoating composition according to any one of claims 1 to 7, wherein the nonionic surfactant is a polyether-modified organopolysiloxane.

10. The undercoating composition according to any one of claims 1 to 9, wherein the photoexcitable coating or the photocatalytically hydrophilifiable coating is a coating capable of being hydrophilified through a photocatalyzed hydrophilification reaction.

11. The undercoating composition according to any one of claims 1 to 9, wherein the photoexcitable coating or the photocatalytically hydrophilifiable coating contains titanium oxide in the form of anatase.

12. The undercoating composition according to any one of claims 1 to 11, wherein the substrate is an organic substrate.

13. The undercoating composition according to any one of claims 1 to 11, wherein the substrate is a coated body.

14. The undercoating composition according to any one of claims 1 to 11, wherein the substrate is a body of an automobile.

15. The undercoating composition according to any one of claims 1 to 11, wherein the substrate is a resin member.

16. The undercoating composition according to any one of claims 1 to 11, wherein the substrate is an inorganic substrate.

17. The undercoating composition according to any one of claims 1 to 11, wherein the substrate is a glass.

18. The undercoating composition according to any one of claims 1 to 11, wherein the substrate is a mirror.

19. The undercoating composition according to any one of claims 1 to 11, wherein the substrate is a lens.

20. The undercoating composition according to any one of claims 1 to 11, wherein the substrate is a stone.

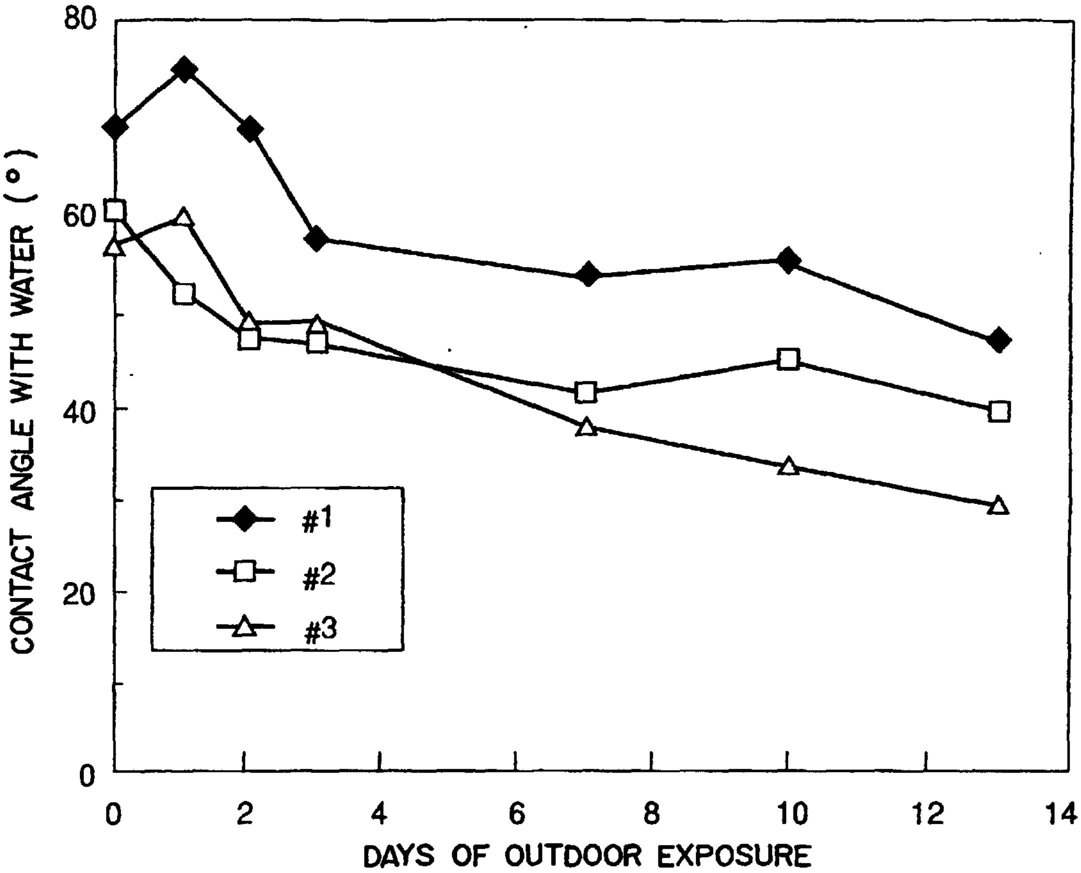
80
60
40
20
0
CONTACT ANGLE WITH WATER (°)
#1
#2
#3
0
2
4
6
8
10
12
14
DAYS OF OUTDOOR EXPOSURE

FIG. 1

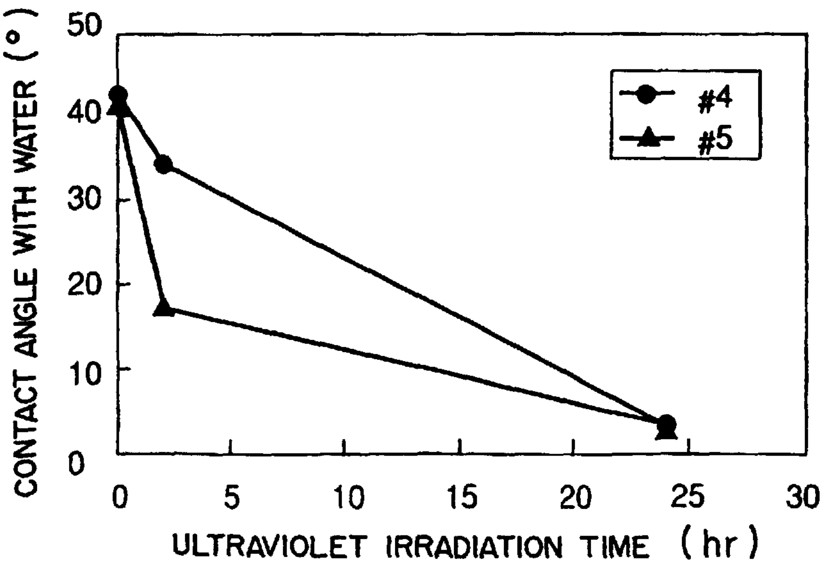
50
40
30
20
10
0
CONTACT ANGLE WITH WATER (°)
#4
#5
0
5
10
15
20
25
30
ULTRAVIOLET IRRADIATION TIME (hr)

FIG.2

## INTERNATIONAL SEARCH REPORT

International application No.
PCT/JP99/03010

A. CLASSIFICATION OF SUBJECT MATTER
Int.Cl$^6$ C09D5/00, C09K3/00, C08J7/04, B05D7/24 // B01J35/02

According to International Patent Classification (IPC) or to both national classification and IPC

B. FIELDS SEARCHED

Minimum documentation searched (classification system followed by classification symbols)
Int.Cl$^6$ C09D5/00, C09K3/00, C08J7/04, B05D7/24

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P, A | JP, 11-158456, A (TOTO Ltd.), 15 June, 1999 (15. 06. 99) | 1-20 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 August, 1999 (11. 08. 99) | 24 August, 1999 (24. 08. 99) |
| Name and mailing address of the ISA/ Japanese Patent Office | Authorized officer |
| Facsimile No. | Telephone No. |

Form PCT/ISA/210 (second sheet) (July 1992)